# EUROPEAN PATENT SPECIFICATION

(11) **EP 1 493 638 B1**
(45) Date of publication and mention of the grant of the patent: **16.11.2005**
(21) Application number: 02720024.5
(22) Date of filing: 10.04.2002
(51) Int. Cl.: B60R 21/26, F16K 13/00

(54) **PRESSURIZED GAS CONTAINER**
DRUCKGASBEHÄLTER
CONTENEUR POUR GAZ SOUS PRESSION

(43) Date of publication of application: 05.01.2005
(73) Proprietor: Dalphi Metal Espana, S.A., 28006 Madrid (ES)
(72) Inventor: MARTINEZ HUERTAS, Damián, 28042 Madrid (ES); ALCALA FAZIO, Enrique, 28042 Madrid (ES); CARRASCOSA PEREZ, Marco, Antonio, 28042 Madrid (ES)
(74) Representative: Elzaburu Marquez, Alberto
(86) International application number: PCT/ES2002/000175
(87) International publication number: WO 2003/084785

(56) References cited:
- EP-A- 0 715 994
- WO-A-02/00474
- WO-A-97/16330
- WO-A-99/12775
- US-A- 3 663 036
- US-A- 4 203 616
- US-A- 5 458 368

## Description

### FIELD OF THE INVENTION

The present invention relates to a pressurized gas container destined for the inflation of airbags used in automobile vehicles and for other purposes which require the rapid exhaustion of a pressurized gas accumulated in a reservoir such as, for example, the pretensioning of safety belts and the extinction of fires and explosions.

More particularly, the present invention relates to a pressurized gas container which employs a small pyrotechnic charge to activate the opening mechanism of the reservoir.

### BACKGROUND OF THE INVENTION

In the art various types of pressurized gas containers are known with an opening mechanism activated by a pyrotechnic mechanism, which same are called compressed gas generators or hybrid gas generators when they use a large quantity of explosive.

US patent 6 206 420 showing the features of the preamble of claim 1 describes a compressed gas generator in which the gas reservoir has an aperture which is closed in a hermetic manner by a plate, at least a substantial part of the free surface of which is supported by an element which can be retracted from its support position by exploding a pyrotechnic charge situated in a compartment of the support device. When this occurs, said closure plate breaks and permits the gas to escape.

US patent 6 234 522 describes a hybrid gas generator for an airbag with a mechanical mechanism for opening the gas reservoir based on the actuation of a piston, activated by the gas generated in a combustion chamber by an explosive charge, on a first rupture disk which closes the gas container and a second rupture disk situated between the combustion chamber and the sliding cavity of the piston. In this generator, the basic mechanism of opening the rupture disk which closes the gas reservoir consists, thus, of a piston which perforates it acting in a direction contrary to that of the pressure of the gas on it.

Patent application EP 0 862 004 describes a compressed gas generator with a mechanism for the rapid release of the gas contained in a reservoir with an aperture closed by a rupture disk in which there are means of support of the rupture disk which, when the opening mechanism is activated, by means of a small explosion, cease to act as means of support, permitting the escape of the pressurized gas and regulating its flow by its moving in a controlled manner due to damping means.

US patent 6 237 951 describes a compressed gas generator in which the gas reservoir has an aperture hermetically closed by a film resting on a support which can be destroyed in a controlled manner on activating a device for the purpose. The support includes a part which ruptures the film when the device for the destruction of the support is triggered but prior to this latter moving.

Patent application WO 99/12775 describes an opening device for a gas container destined to inflate an airbag formed by a casing coupled to the mouth of the container. The container has a blocking element which closes the gas escape orifice and which, by means of a pressure part, rests on a counter-support, resisting the pressure exerted by the gas on the blocking element. There is a triggering mechanism which eliminates the support of the blocking element, enabling the opening of the gas escape orifice. To control the gas escape flow, a restricting plate is included prior to the blocking element referred to, delimiting a pressure chamber between said elements.

Patent application EP 1 075 988 describes a compressed gas generator in which the escape orifice of the gas is closed by a rupturable element which rests on a support to resist the pressure of the gas. The part of the rupturable element which is in contact with the support separates from the remainder when a pyrotechnic device actuates, permitting the escape of the gas.

### SUMMARY OF THE INVENTION

The present invention has as its object the resolution of several problems of the hybrid gas generators known in the art and particularly:
- To prevent the gases escaping from the generator being able to entrain elements produced by the pyrotechnic mechanisms which activate the device for opening the gas reservoir.
- To prevent the system of support of the closure element of the gas escape orifice of the reservoir being subjected to stresses differing from those of pure compression.
- To prevent the rupture of the closure element of the gas escape orifice of the reservoir being produced by a mechanism other than the pressure differential between its two faces and in a direction and sense differing from those of the escape of the gas.
- To eliminate the displacement of parts in a direction differing from that of the escape flow of the gases when the support mechanism of the closure element of the gas escape orifice of the reservoir is deactivated.

In addition, the invention has the intention of incorporating a safety mechanism into the gas generator which permits the escape of the gas when the pressure differential on the two faces of the closure element of the gas escape orifice attains a certain limit.

To achieve these objects, the gas container according to claim 1 which is the subject of the present invention is formed by a reservoir for the accumulation of the gas, which includes a closure device in its upper part which partially resists the pressure of the gas accumulated in the interior of the reservoir, and which in consequence requires an additional mechanism which contributes to resisting said pressure to maintain said reservoir closed, and a distributor body rigidly joined to the upper part of the reservoir which houses in its interior a support device which provides the closure device with the additional resistance referred to, a pyrotechnic device to destroy said support device and permit the opening of the reservoir and gas escape chamber with exhaustion ducts toward the exterior.

According to the invention, the closure device of the reservoir is constituted by a calibrated outlet plate with a central orifice for the escape of the gas on whose exterior face, in the direction of escape of the gas, there is a rupture disk joined to the calibrated outlet plate by a circumferential weld which has within its interior the orifice referred to.

For its part, the support device includes a pillar which, when the pyrotechnic device actuates, is displaced to a release chamber provided in the distributor body or is destroyed, the remains falling into said release chamber, eliminating the additional resistance provided by the support device to prevent the rupturing of the rupture disk. Said release chamber is situated in a zone distinct from the escape chamber gas of the generator such that these latter do not come into contact with any of the materials involved in the displacement or destruction of the pillar referred to.

In a first embodiment, in which the pillar is displaced to the release chamber when the pyrotechnic device actuates, the support device includes three basic elements: a disk support as a direct support for the rupture disk, the pillar referred to and a plug in contact with the distributor body which, when the reservoir is closed, are subjected to pure compression by the pressure of the gas. To guarantee this condition the device may include as auxiliary parts two centering parts between the elements referred to.

The disk support can move within a duct of the distributor body situated between the gas escape chamber and the release chamber and has a part which acts as a stop and closure such that said chambers are not in communication.

In a second embodiment, in which the pillar is destroyed when the pyrotechnic device actuates, the support device includes solely the disk support and the pillar which, as in the first embodiment, are subjected to pure compression.

The disk support also includes in both embodiments an internal duct which opens into a chamber communicating with the gas escape chamber of the generator by means of radial ducts. If the rupture disk ruptures when the pressure of the gas exceeds a given value, the gas from the container does not escape directly to the gas escape chamber but through the internal ducts referred to of the disk support, providing in this manner a safety mechanism for the gas container.

The gas container according to the present invention may have the ducts for the exhaustion of gases to the exterior arranged in such a way that their axis is perpendicular or parallel to the axis of the container, which facilitates its adaptability to different types of devices, whether airbags, belt pretensioning devices, devices for extinguishing fires or explosions or others.

Other characteristics and advantages of the present invention shall be gathered from the detailed description which follows an illustrative, and in no sense limitative embodiment, of its object in relation to the drawings which are appended.

### DESCRIPTION OF THE FIGURES

Figure 1 is a perspective view of a compressed gas container.
Figure 2 is a perspective and ordered exploded view of the set of elements which constitute a pressurized gas container according to a first embodiment of the invention with displaceable pillar.
Figure 3 is a partial perspective view of the interior of the pressurized gas generator according to the first embodiment of the invention which shows the support device and the pyrotechnic device included in the same.
Figure 4 is a perspective view of the pressurized gas container according to the invention cut by a vertical plane (with respect to the position shown in figure 1).
Figure 5 is a cross-sectional view of figure 4.
Figure 6 is a cross-sectional view in the same plane as figure 5 of a second embodiment of the invention with destructible pillar.
Figures 7 and 8 are partial views of the cross section referred to which show the pressurized gas container prior to and subsequent to activating the pyrotechnic device.
Figures 9 and 10 are partial views of the cross section referred to which show the pressurized gas container prior to and subsequent to a rupture of the rupture disk.
Figure 11 is a perspective view of an internal cross section of the second embodiment of the invention showing axial ducts for the exhaustion of gases.
Figure 12 is a perspective view of an internal cross section of the second embodiment of the invention showing ducts for the exhaustion of gases with one part being axial and another radial.

### DETAILED DESCRIPTION OF THE INVENTION

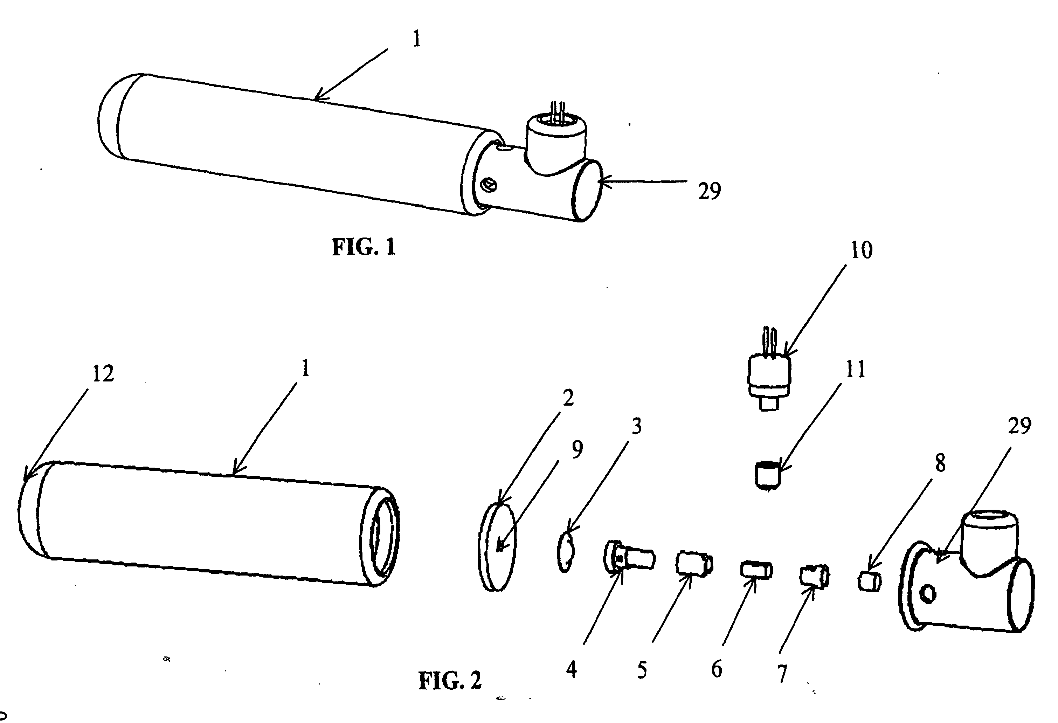

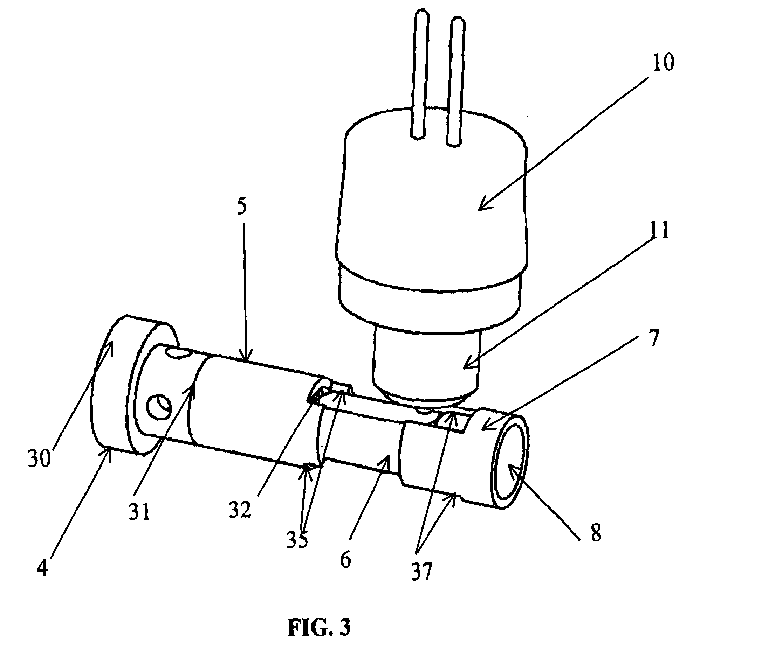

Following figures 1 to 5 it may be observed that the pressurized gas container is formed, in a first embodiment of the present invention which is described below, by a reservoir 1 of cylindrical form wherein the pressurized gas shall be accumulated and a series of elements, situated within a distributor body 29, to maintain it hermetically closed until an opening mechanism is activated to facilitate the escape of the gas.

The reservoir 1 acts as an accumulator of gas, this latter being capable of being any type of gas and in particular a mixture of rare gases. The reservoir 1 must be gas-tight and for this reason its lower part 12, through which filling with the gas is executed, must be configured in such a manner as to be able to proceed to the same and such that it may remain hermetically closed subsequent to filling with gas.

At its upper part, the reservoir 1 is closed by means of the calibrated outlet plate 2, which has a central orifice 9 of diameter d1 for the escape of gas, and the rupture disk 3 which blocks said orifice and is welded to the plate 2 to ensure the necessary level of hermeticity.

The opening device situated within the distributor body 29 includes, on the one hand, a support device for the rupture disk 3 to maintain the reservoir 1 closed and, on the other hand, a device for activating the rupture of the rupture disk 3 such that the gases escape at the desired moment.

The support device consists of the following elements: the disk support 4, the lower centering part 5, the pillar 6, the upper centering part 7 and the upper plug 8.

For its part the activation mechanism consists of the igniter device 10 and the impactable mass 11.

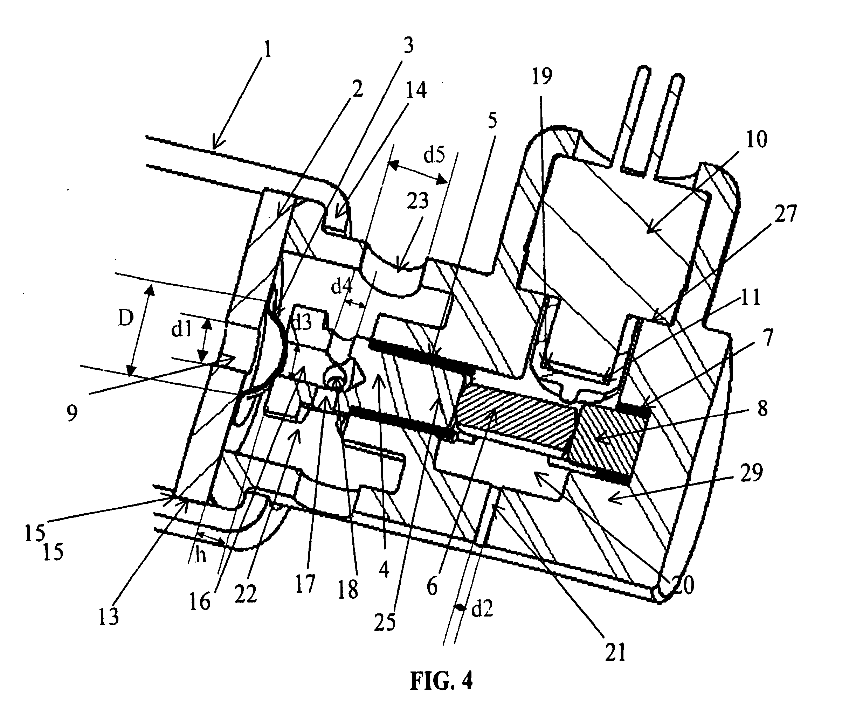

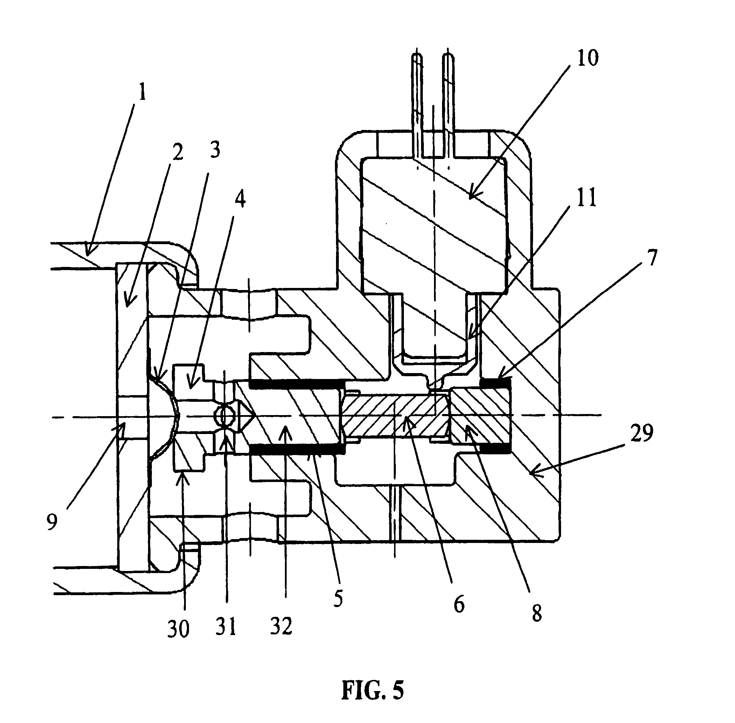

Following in particular figures 4 and 5 it may be observed that the gas contained in the reservoir 1 generates a stress on the calibrated outlet plate 2 and on the rupture disk 3 due to the internal pressure.

The calibrated outlet plate 2 resists this stress on being joined to the reservoir 1 by means of a weld of adequate width.

The rupture disk 3 communicates with the reservoir 1 by means of the orifice 9 of diameter d1 made in the calibrated outlet plate 2, in such a manner that its lower face is in contact with the pressurized gas. To resist said pressure, the rupture disk 3 is welded to the calibrated outlet plate 2 in a circumferential manner with diameter of weld D.

Due to the pressure of the gas, the central part of the rupture disk 3 is deformed by a distance h, a value depending on its thickness and the diameter of weld D, which must always be greater than the diameter d1 selected for the orifice 9 of the calibrated outlet plate 2, as a function of the requirements of the exhaustion of the gas.

The rupture disk 3 is dimensioned in such a manner that of itself it is not able to resist the internal pressure of the gas accumulated in the reservoir 1, requiring for such purpose an additional support mechanism.

Figure 3 shows, in its lower part, said mechanism, once the elements of which it consists have been assembled, that is to say the disk support 4 at one extremity, the pillar 6 in the center, the plug 8 at the other extremity and the centering parts 5 and 7 as auxiliary elements. In that figure there is also shown the activating mechanism for opening to illustrate its operation: the igniter 10 triggers the mass 11 which displaces the pillar 6 from its position depriving the rupture disk 3 of the support provided by the disk support 4, which is freely displaced toward the right on not being impeded by the pillar 6.

The first element of the support mechanism, the disk support 4, is located concentrically with the calibrated outlet plate 2 and is formed by a first part 30 with an internal duct 16 of diameter d3, a second part 31 in which said internal duct continues and in which there also exist ducts 17, 18 of diameter d4 with axis perpendicular to that of the duct 16 and a third heavy part 32. The first part 31 serves as a centerer for the calibrated outlet plate 2 and for the distributor body 29 which in its turn centers the disk support 4.

The stress on the rupture disk 3 is reacted against by the disk support 4 which in its turn transmits the load to the pillar 6, this latter to the upper plug 8 and this latter to the distributor body 29. Finally the distributor body 29 is in static equilibrium as its lower part is engaged by the closure of the mouth 14 of the reservoir 1, above the calibrated outlet plate 2, which is situated in the step 15 of the upper part of the reservoir, which serves to define the distance h existing between the rupture disk 3 and the disk support 4.

The disk support 4 includes, as has previously been stated, an internal duct 16, axial with respect to the axis of the reservoir, whose diameter d3 serves as a parameterizing element of the pressure at which the rupture disk 3 acts as safety valve. It also has internal ducts 17, 18 perpendicular to the axis of the reservoir 1 and also perpendicular to one another to regulate the escape velocity of the flow of gas in the situation of functioning as safety valve.

Assembled on the distributor body 29 there is the pyrotechnic igniter 10, the position of which is ensured with respect to the pillar 6 by means of the step 27 made in the distributor body 29.

In the desired activation of the system, which, in the case of use of the gas container as a device for inflation of an airbag, takes place when an accident is detected, the igniter 10 is electrically fed and the explosion of the pyrotechnic charge is activated, generating a pressure peak in the chamber 19 which makes the impactable mass 11 impact against the pillar 6. This impact makes the pillar 6 pivot in a clockwise direction, overcoming the frictional force existing between the upper plug 8 and the pillar 6 and also overcoming the moment resisting pivoting between the pillar 6 and the disk support 4.

The difference in surface hardness between the disk support 4 and the pillar 6, selecting appropriate materials for each one of the same, makes a small circular groove in the disk support 4, due to the compression to which they are subjected, which facilitates pivoting.

In addition, and also due to the difference in material used for the pillar 6 and the upper plug 8, a small plane is generated in the pillar 6 designed to work with the force which brings the assembly into equilibrium and, in addition, to facilitate pivoting when the impactable mass 11 impacts against the pillar 6.

The lower centering part 5 is a plastic part whose function is to center the elements in its interior, that is to say the disk support 4 and the pillar 6, with respect to the distributor body 29, in addition to facilitating assembly.

The upper centering part 7 is a plastic part whose function is to center the elements in its interior, that is to say the pillar 6 and the plug 8, with respect to the distributor body 29, in addition to facilitating assembly.

Both the centering parts 5, 7 include weakened zones 35, 37 on the side more distant from the igniter 10 to permit the easy displacement of the pillar 6 when it is impacted by the mass 11.

The displacement of the pillar 6 is effected in such a manner that this latter does not interfere with the movement of the disk support 4. Due to the volume of the chamber 20 delimited in the distributor body 29 in the zone where the pillar 6 is situated and the geometry of the disk support 4, the displacement of the disk support 4 along the duct 25 occurs without permanent resistance differing from the pressure in the chamber 20, controlled by the duct 21 of diameter d2 which brings it into contact with the exterior.

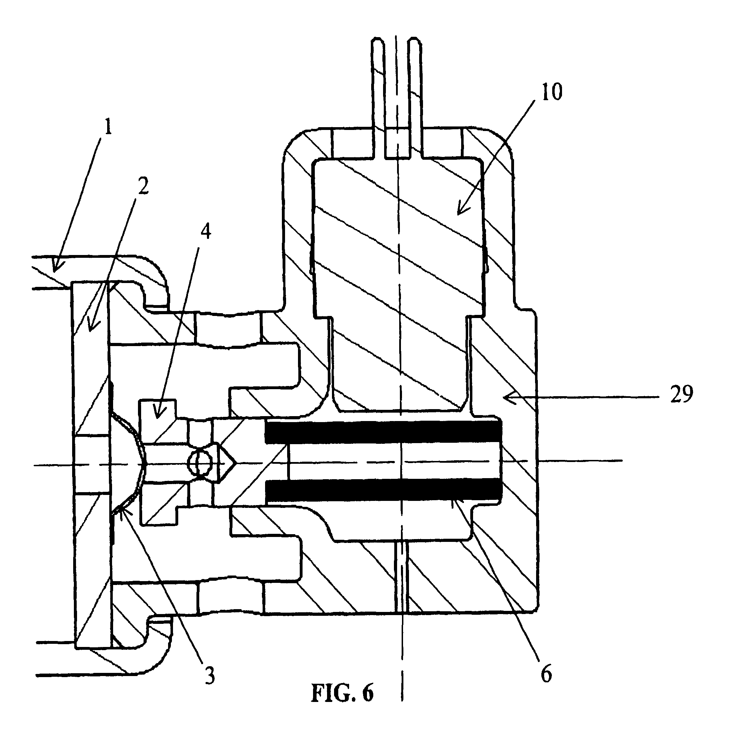

Figure 6 shows a second embodiment of the invention which, as may be appreciated by comparing it with figure 4, differs solely from the first embodiment in that the support device consists only of the disk support 4 and a pillar 6 and in that the pyrotechnic device is configured to destroy the pillar instead of displacing it.

When it is necessary to activate the device such as, for example, when an accident is detected if the generator is destined for the inflation of an airbag of an automobile vehicle, the igniter 10 is electrically fed and the explosion of the pyrotechnic is activated, generating a pressure wave in the release chamber 20 and the spontaneous rupture of the pillar 6 due to its internal location and the increase of local stresses of the material.

The gas generated in the explosion of the igniter 10 is expelled through the duct 21 of diameter d2, it being possible to control the speed of movement of the disk support 4 with the pressure existing in the release chamber 20 by means of the diameter d2 of the duct 21.

Using an appropriate material, the rupture of the pillar 6 occurs in such a manner that the resulting pieces do not interfere with the movement of the disk support 4 and that they cannot escape along the duct 21. Due to the volume of the chamber 20 and the geometry of the disk support 4, the volume of the pieces of fragmented material permits the displacement of the disk support 4 along the duct 25 without permanent resistance differing from the pressure in the release chamber controlled by the diameter of the duct 21.

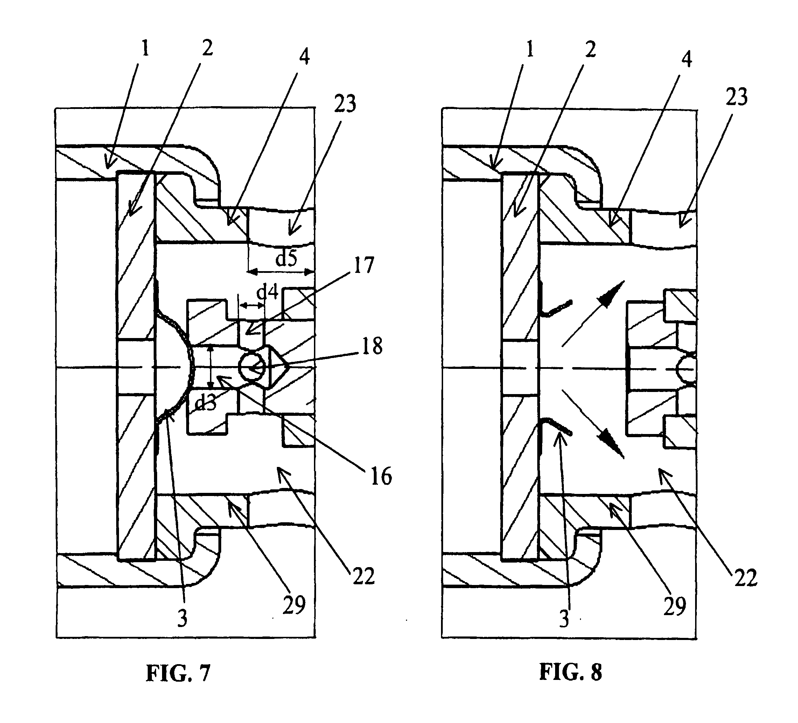

Following figures 7 and 8 it may be observed that on displacing or destroying the pillar 6, according to one or other of the embodiments described, the rupture disk 3 looses the element which reacted against the internal pressure of the reservoir 1 and on not being able to counteract it of itself it continues to deform and push the disk support 4 in the axial direction, until the moment at which, due to the stress in the rupture disk 3, its rupture occurs and the gas commences to escape toward the escape chamber 22 provided in the distributor body 29, its flow being controlled by the diameter d1 of the orifice 9 of the calibrated outlet plate 2.

The propulsive force of the escaping flow acts directly against the disk support 4, obliging this latter to be displaced toward its axial limit with the distributor body 29.

In this situation the gas escaping from the reservoir 1 is expelled to the exterior through the escape chamber 22 and the radially distributed escape ducts 23 of diameter d5 to the exterior.

From the foregoing explanation it may be deduced that the gas escape flow does not at any time come into contact with parts impacted or destroyed during the activation of the opening device.

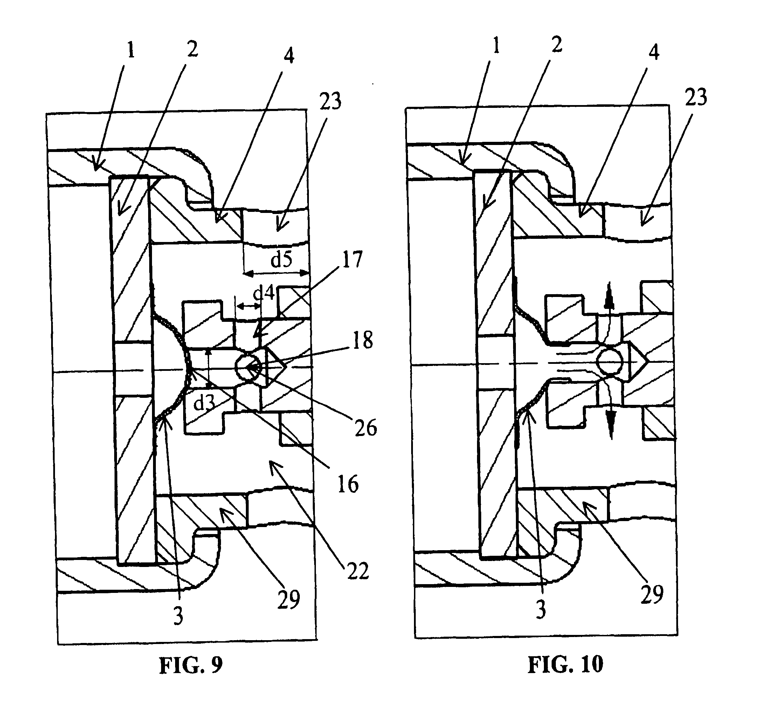

For its part, the rupture disk 3 also acts as a safety valve as shall be seen below following figures 9 and 10.

Whilst the igniter 10 has not been activated, the pillar 6 and the disk support 4 remain in their normal position supporting the force transmitted by the rupture disk 3. In this situation, the rupture disk 3 is enabled to rupture if the pressure differential between its internal and its external faces attains a given limiting value. In this case, the gas enters the internal duct 16 of the disk support 4 which opens into the chamber 26 which communicates with the gas escape chamber 22 by means of the ducts 17, 18 of diameter d4. The gas will escape to the exterior from the gas escape chamber 22 along the ducts 23 of diameter d5 situated in the distributor body 29.

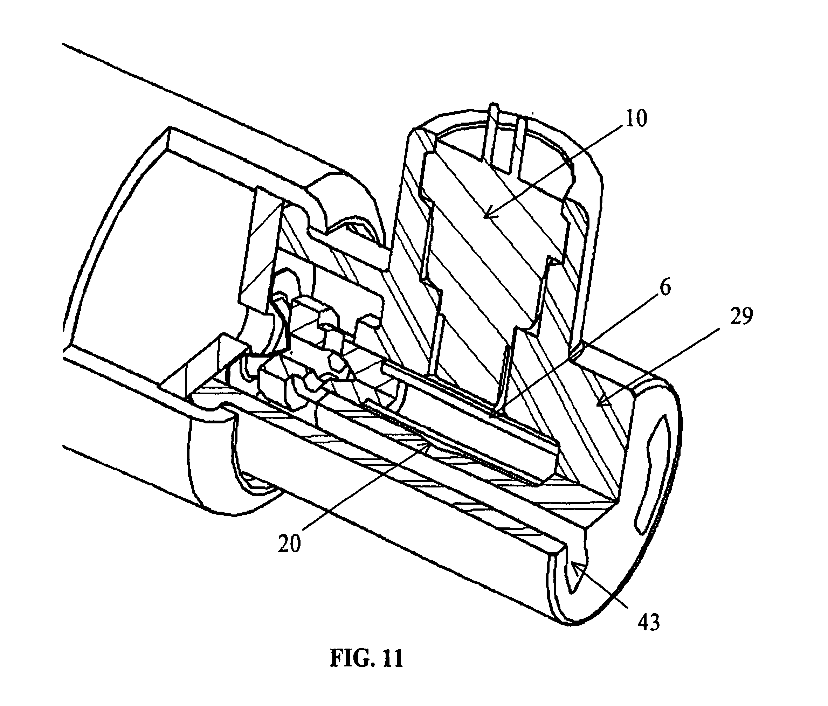

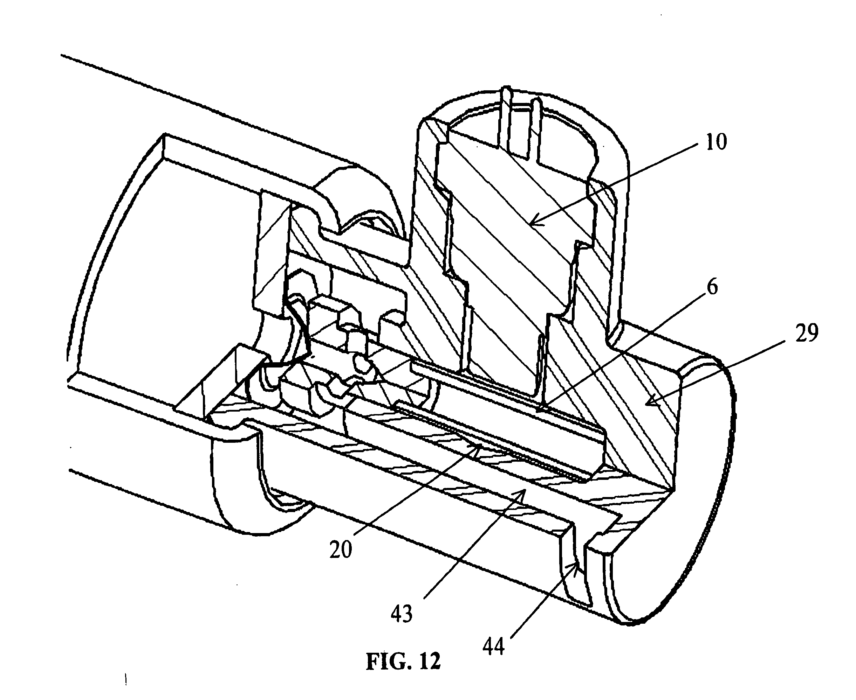

In the embodiments of the invention which have just been described, the configuration of the distributor body includes, as has been seen, a gas escape chamber 22 separated from the release chamber 20 where there occurs the displacement of the pillar 6 of the support device as a consequence of the impact by the mass 11 or its destruction by means of the explosion of the pyrotechnic charge. This gas escape chamber 22 has radial escape ducts 23 close to the mouth of the reservoir 1. As is shown in figures 11 and 12 with respect to the second embodiment of the invention, and which would also be applicable to the first embodiment, there exists the variant in which the escape ducts of the gases are not configured in the same way as the radial ducts 23 referred to. Figure 11 shows axial ducts 43 which open into the upper extremity of the distributor body and figure 12 shows ducts with an axial part 43 and a radial part 44 distant from the mouth of the reservoir 1. As is shown in figures 11 and 12 these ducts are separated from the release chamber 20 such that the escape gases do not entrain any material from the elements involved in the activation mechanism of the opening device.

With reference to the embodiments described of the invention, those modifications comprised within the scope delimited by the following claims may be introduced.

## Claims

1. A pressurized gas container which includes: a reservoir (1) for the accumulation of the gas with a closure device (2, 3) in its upper part supported on a support device (4, 5, 6, 7, 8) which contributes with it to resisting the pressure of the gas; a pyrotechnic device (10, 11) to destroy the support device (4, 5, 6, 7, 8) referred to and permit the opening of the reservoir (1) and a distributor body (29) rigidly joined to the upper part of the reservoir (1) which houses in its interior said support device (4, 5, 6, 7, 8), said pyrotechnic device (10, 11) and a gas escape chamber (22) with exhaustion ducts (23, 43) toward the exterior, **characterized in that**:
a) the closure device of the reservoir (1) is formed by a calibrated outlet plate (2) with a central orifice (9) for the escape of the gas on whose exterior face, in the direction of escape of the gas, there is a rupture disk (3) joined to the calibrated outlet plate (2) by a circumferential weld which has within its interior the orifice (9) referred to;
b) the support device includes a pillar (6) which, on activating the pyrotechnic device (10, 11), leaves its position in the support device and falls into a release chamber (20) provided within the distributor body (29);
c) the support device includes a disk support (4) as a direct support for the rupture disk (3) which, when the pillar (6) leaves its position and the rupture disk (3) ruptures, is able to move within a duct (25) of the distributor body (29) situated between the gas escape chamber (22) and the release chamber (20), said disk support (4) being configured in such a manner as to prevent communication between the gas escape chamber (23) and the release chamber (20).

2. The pressurized gas container as claimed in claim 1, **characterized in that**, at the extremity which comes into contact with the rupture disk (3), the disk support (4) includes an interior axial duct (16) which terminates in a chamber (26) which communicates with the gas escape chamber (22) by means of radial ducts (17, 18) to facilitate the exhaustion of the gas in the case of rupture of the rupture disk (3).

3. The pressurized gas container as claimed in claim 2, **characterized in that** the disk support (4) is formed by a first part (30) of cylindrical form, with a diameter greater than that of the duct (25) referred to situated in the distributor body (29) between the gas escape chamber (22) and the release chamber (20), with the axial duct (16) referred to in its interior; a second part (31), of cylindrical form and diameter slightly smaller than that of said duct (25) to be able to move within it, with the chamber (26) and the radial ducts (17, 18) in its interior; and a third part (32) of heavy cylindrical form and diameter less than that of the second part (31).

4. The pressurized gas container as claimed in any of claims 1 to 3, **characterized in that** the support device also includes a plug (8) to transmit the pressure received from the rupture disk (3) to the distributor body (29) and centering parts (5, 7) between the pillar (6) and, respectively, the disk support (4) and the plug (8) to facilitate the support device as a whole being subjected to a pure compression force.

5. The pressurized gas container as claimed in claim 4, **characterized in that** the pyrotechnic device is formed by an igniter (10) and a displaceable mass (11) which impacts, when the igniter is activated, against the pillar (6), displacing it from its position within the support device and depositing it in the release chamber (20).

6. The pressurized gas container as claimed in claim 4, **characterized in that** the pillar (6) and the disk support (4) are made from materials of different surface hardness such that the compression force to which they are subjected generates a surface groove in the disk support (4) which facilitates the pivoting of the pillar (6) when it suffers the impact of the mass (11).

7. The pressurized gas container as claimed in claim 4, **characterized in that** the centering parts (5, 7) include weakened zones (35, 37) at their extremities in contact with the pillar (6) to facilitate their displacement.

8. The pressurized gas container as claimed in any of claims 1 to 3, **characterized in that** the support device, formed by the disk support (4) and the pillar (6), is situated within the distributor body (29) such that the pillar (6) transmits to it the pressure received from the rupture disk (3), the disk support (4) and the pillar (6) being subjected to a pure compression force.

9. The pressurized gas container as claimed in claim 8, **characterized in that** the pyrotechnic device includes an igniter (10) to activate the explosion of a pyrotechnic charge which generates a pressure wave which destroys the pillar (6).

10. The pressurized gas container as claimed in any of claims 1 to 9, **characterized in that** the calibrated outlet disk (2) is situated in the mouth of the reservoir in the position defined by a step (15) delimited in the reservoir (1) to determine that the axial distance between the rupture disk (3) and the extremity of the disk support (4) is of a predetermined magnitude (h).

11. The pressurized gas container as claimed in any of claims 1 to 9, **characterized in that** the release chamber (20) communicates with the exterior by means of a duct (21).

12. The pressurized gas container as claimed in any of claims 1 to 9, **characterized in that** the gas escape chamber (22) has the ducts for exhaustion of gases (23) situated in such a manner that their axis is perpendicular to the axis of the reservoir (1).

13. The pressurized gas container as claimed in any of claims 1 to 9, **characterized in that** the gas escape chamber (22) has the ducts for exhaustion of gases (43) situated in such a manner that their axis is parallel to the axis of the reservoir (1).

## Patentansprüche

1. Druckgasbehälter, der aufweist:
einen Vorratsbehälter (1) zum Sammeln des Gases mit einer Verschlussvorrichtung (2, 3) in seinem oberen Teil, das auf einer Lagerungsvorrichtung (4, 5, 6, 7, 8) gelagert ist, die damit dazu beiträgt, dem Druck des Gases standzuhalten;
eine pyrotechnische Vorrichtung (10, 11), um die betreffende Lagerungsvorrichtung (4, 5, 6, 7, 8) zu zerstören und die Öffnung des Vorratsbehälters (1) und eines mit dem oberen Teil des Vorratsbehälters (1) starr verbundenen Verteilergehäuses (29), in dessen Inneren die Lagerungsvorrichtung (4, 5, 6, 7, 8), die pyrotechnische Vorrichtung (10, 11) und eine Gasaustrittskammer (22) mit Ausströmkanälen (23, 43) in das Äußere untergebracht sind, zu ermöglichen,
**dadurch gekennzeichnet, dass**
a) die Verschlussvorrichtung des Vorratsbehälters (1) durch eine kalibrierte Auslassplatte (2) mit einer mittigen Öffnung (9) für den Austritt des Gases ausgebildet ist, an deren äußerer Fläche in der Austrittsrichtung des Gases es eine Bruchplatte (3) gibt, die mit der kalibrierten Auslassplatte (2) durch eine Umfangsschweißung verbunden ist, die in ihrem Inneren die betreffende Öffnung (9) hat;
b) die Lagerungsvorrichtung eine Stütze (6) aufweist, die beim Aktivieren die pyrotechnischen Vorrichtung (10, 11) ihre Position in der Ladungsvorrichtung verlässt und in eine Freigabekammer (20) fällt, die im Verteilergehäuse (29) angeordnet ist;
c) die Lagerungsvorrichtung eine Scheibenlagerung (4) als eine direkte Lagerung für die Bruchscheibe (3) aufweist, die sich, wenn die Stütze (6) ihre Position verlässt und die Bruchscheibe (3) bricht, in einem Kanal (25) des Verteilergehäuses (29) bewegen kann, der sich zwischen der Gasaustrittskammer (22) und der Freigabekammer (20) befindet, wobei die Scheibenlagerung (4) in einer Weise gestaltet ist, dass sie eine Verbindung zwischen der Gasaustrittskammer (23) und der Freigabekammer (20) verhindert.

2. Druckgasbehälter nach Anspruch 1, **dadurch gekennzeichnet, dass** am äußeren Ende, das mit der Bruchscheibe (3) in Kontakt kommt, die Scheibenlagerung (4) einen inneren, axialen Kanal (16) aufweist, der in einer Kammer (26) endet, die mit der Gasaustrittskammer (22) mittels radialer Kanäle (17, 18) in Verbindung steht, um das Ausströmen des Gases im Fall des Brechens der Bruchscheibe (3) zu erleichtern.

3. Druckgasbehälter nach Anspruch 2, **dadurch gekennzeichnet, dass** die Scheibenlagerung (4) durch einen ersten Teil (30) aus einer zylindrischen Form mit einem Durchmesser, der größer ist als der des betreffenden Kanals (25), der zwischen der Gasaustrittskammer (22) und der Freigabekammer (20) angeordnet ist, wobei sich der betreffende axiale Kanal (16) in seinem Inneren befindet, einen zweiten Teil (31) mit zylindrischer Form und einem Durchmesser, der etwas kleiner ist als der des Kanals (25), um sich darin bewegen zu können, wobei sich die Kammer (26) und die radialen Kanäle (17, 18) in seinem Inneren befinden, und einen dritten Teil (32) mit massiver, zylindrischer Form und einem Durchmesser ausgebildet ist, der kleiner ist als der des zweiten Teils (31).

4. Druckgasbehälter nach einem der Ansprüche 1 bis 3, **dadurch gekennzeichnet, dass** die Lagerungsvorrichtung außerdem einen Stopfen (8), um den von der Bruchscheibe (3) aufgenommenen Druck auf das Verteilergehäuse (29) zu übertragen, und Zentrierteile (5, 7) zwischen der Stütze (6) bzw. der Scheibenlagerung (4) und dem Stopfen (8) aufweist, um die Lagerungsvorrichtung als ein Ganzes zu fördern, die einer reinen Druckkraft unterliegt.

5. Druckgasbehälter nach Anspruch 4, **dadurch gekennzeichnet, dass** die pyrotechnische Vorrichtung durch einen Zünder (10) und eine verschiebbare Masse (11) ausgebildet ist, die gegen die Stütze (6) prallt, wenn der Zünder aktiviert wird, wobei sie ihn in seiner Position in der Lagerungsvorrichtung verschiebt und ihn in der Freigabekammer (20) ablegt.

6. Druckgasbehälter nach Anspruch 4, **dadurch gekennzeichnet, dass** die Stütze (6) und die Scheibenlagerung (4) aus Materialien unterschiedlicher Oberflächenhärte hergestellt sind, so dass die Druckkraft, der sie unterliegen, eine Oberflächennut in der Scheibenlagerung (4) erzeugt, die das Schwenken der Stütze (6) erleichtert, wenn die Masse (11) aufprallt.

7. Druckgasbehälter nach Anspruch 4, **dadurch gekennzeichnet, dass** die Zentrierteile (5, 7) Schwachstellen (35, 37) an deren äußeren Enden in Kontakt mit der Stütze (6) aufweisen, um deren Verschiebung zu erleichtern.

8. Druckgasbehälter nach einem der Ansprüche 1 bis 3, **dadurch gekennzeichnet, dass** sich die Lagerungsvorrichtung, die durch die Scheibenlagerung (4) und die Stütze (6) gebildet wird, so im Verteilergehäuse (29) befindet, dass die Stütze (6) den von der Bruchscheibe (3) aufgenommenen Druck dahin überträgt, wobei die Scheibenlagerung (4) und die Stütze (6) einer reinen Druckkraft unterliegen.

9. Druckgasbehälter nach Anspruch 8, **dadurch gekennzeichnet, dass** die pyrotechnische Vorrichtung einen Zünder (10) aufweist, um die Explosion einer pyrotechnischen Ladung zu aktivieren, die eine Druckwelle erzeugt, die die Stütze (6) zerstört.

10. Druckgasbehälter nach einem der Ansprüche 1 bis 9, **dadurch gekennzeichnet, dass** sich die geeichte Auslassscheibe (2) in der Öffnung des Vorratsbehälters in der Position befindet, die durch eine Stufe (15) definiert ist, die im Vorratsbehälter (1) begrenzt ist, um festzulegen, dass axiale Abstand zwischen der Bruchscheibe (3) und dem äußeren Ende der Scheibenlagerung (4) eine vorgegebene Größe (h) hat.

11. Druckgasbehälter nach einem der Ansprüche 1 bis 9, **dadurch gekennzeichnet, dass** die Freigabekammer (20) mit dem Äußeren durch einen Kanal (21) in Verbindung steht.

12. Druckgasbehälter nach einem der Ansprüche 1 bis 9, **dadurch gekennzeichnet, dass** die Kanäle der Gasaustrittskammer (22) zum Ausströmen von Gasen (23) in einer Weise angeordnet sind, dass deren Achse rechtwinklig zur Achse des Vorratsbehälters (1) liegt.

13. Druckgasbehälter nach einem der Ansprüche 1 bis 9, **dadurch gekennzeichnet, dass** die Kanäle der Gasaustrittskammer (22) zum Ausströmen von Gasen (43) in einer Weise angeordnet sind, dass deren Achse parallel zur Achse des Vorratsbehälters (1) liegt.

## Revendications

1. Récipient pour gaz sous pression comprenant : un réservoir (1) pour l'accumulation du gaz, muni d'un dispositif de fermeture (2, 3) dans sa partie supérieure supporté par un dispositif de support (4, 5, 6, 7, 8) qui contribue avec lui à résister à la pression du gaz, un dispositif pyrotechnique (10, 11) pour détruire ledit dispositif de support (4, 5, 6, 7, 8) et permettre l'ouverture du réservoir (1) et un corps distributeur (29) relié de manière rigide à la partie supérieure du réservoir (1) à l'intérieur duquel sont logés ledit dispositif de support (4, 5, 6, 7, 8), ledit dispositif pyrotechnique (10, 11) et une chambre d'évacuation (22) de gaz ayant des conduits d'évacuation (23, 43) orientés vers l'extérieur, **caractérisé en ce que** :
a) le dispositif de fermeture du réservoir (1) est formé par une plaque de sortie calibrée (2) ayant un orifice central (9) pour la sortie du gaz, sur la face extérieure de laquelle, dans le sens d'évacuation du gaz, se trouve un disque de rupture (3) relié à la plaque de sortie calibrée (2) par une soudure périphérique qui comporte à l'intérieur ledit orifice (9) ;
b) le dispositif de support comporte un pilier (6) qui, lors de l'activation du dispositif pyrotechnique (10, 11), quitte sa position dans le dispositif de support et tombe dans une chambre de dégagement (20) prévue à l'intérieur du corps distributeur (29) ;
c) le dispositif de support comporte un support (4) de disque comme support direct pour le disque de rupture (3) qui, lorsque le pilier (6) quitte sa position et que le disque de rupture (3) cède, est apte à se déplacer à l'intérieur d'un conduit (25) du corps distributeur (29) situé entre la chambre d'évacuation (22) de gaz et la chambre de dégagement (20), ledit support (4) de disque étant conçu pour empêcher la communication entre la chambre d'évacuation (23) de gaz et la chambre de dégagement (20).

2. Récipient pour gaz sous pression selon la revendication 1, **caractérisé en ce que**, à l'extrémité qui vient en contact avec le disque de rupture (3), le support (4) de disque comporte un conduit axial intérieur (16) qui se termine dans une chambre qui communique avec la chambre d'évacuation (22) de gaz au moyen de conduits radiaux (17, 18) afin de faciliter la sortie du gaz en cas de rupture du disque de rupture (3).

3. Récipient pour gaz sous pression selon la revendication 2, **caractérisé en ce que** le support (4) de disque est formé par une première partie (30) de forme cylindrique, ayant un diamètre supérieur à celui dudit conduit (25) situé dans le corps distributeur (29) entre la chambre d'évacuation (22) de gaz et la chambre de dégagement (20), avec ledit conduit axial (16) à l'intérieur, une deuxième partie (31), de forme cylindrique et de diamètre légèrement inférieur à celui dudit conduit (25) pour pouvoir se déplacer dans celui-ci, avec la chambre (26) et les conduits radiaux (17, 18) à l'intérieur, et une troisième partie (32) de forme cylindrique lourde et de diamètre inférieur à celui de la deuxième partie.

4. Récipient pour gaz sous pression selon l'une quelconque des revendications 1 à 3, **caractérisé en ce que** le dispositif de support comprend également un raccord (8) pour transmettre la pression reçue du disque de rupture (3) au corps distributeur (29) et des pièces de centrage (5, 7) entre le pilier (6) et, respectivement, le support (4) de disque et le raccord (8) pour aider le dispositif de support dans son ensemble à être soumis à un effort de compression pure.

5. Récipient pour gaz sous pression selon la revendication 4, **caractérisé en ce que** le dispositif pyrotechnique est formé d'un allumeur (10) et d'une masse mobile (11) qui, lorsque l'allumeur est activé, heurte le pilier (6), le déplaçant de sa position à l'intérieur du dispositif de support et le déposant dans la chambre de dégagement (20).

6. Récipient pour gaz sous pression selon la revendication 4, **caractérisé en ce que** le pilier (6) et le support (4) de disque sont faits de matériaux présentant des duretés de surface différentes, de sorte que l'effort de compression auquel ils sont soumis génère une rainure de surface dans le support (4) de disque, ce qui facilite le pivotement du pilier (6) lorsqu'il subit le choc de la masse (11).

7. Récipient pour gaz sous pression selon la revendication 4, **caractérisé en ce que** les pièces de centrage (5, 7) comprennent des zones affaiblies (35, 37) en leurs extrémités en contact avec le pilier (6) afin de faciliter leur déplacement.

8. Récipient pour gaz sous pression selon l'une quelconque des revendications 1 à 3, **caractérisé en ce que** le dispositif de support, formé par le support (4) de disque et le pilier (6), est situé à l'intérieur du corps distributeur (29), de sorte que le pilier (6) lui transmet la pression transmise par le disque de rupture (3), le support (4) de disque et le pilier (6) étant soumis à un effort de compression pure.

9. Récipient pour gaz sous pression selon la revendication 8, **caractérisé en ce que** le dispositif pyrotechnique comprend un allumeur (10) pour activer l'explosion d'une charge pyrotechnique qui génère une onde de pression qui détruit le pilier (6).

10. Récipient pour gaz sous pression selon l'une quelconque des revendications 1 à 9, **caractérisé en ce que** le disque de sortie calibré (2) est situé dans l'embouchure du réservoir dans la position définie par un épaulement (15) délimité dans le réservoir (1) pour déterminer que la distance axiale séparant le disque de rupture (3) de l'extrémité du support (4) de disque a une taille prédéterminée (h).

11. Récipient pour gaz sous pression selon l'une quelconque des revendications 1 à 9, **caractérisé en ce que** la chambre de dégagement (20) communique avec l'extérieur au moyen d'un conduit (21).

12. Récipient pour gaz sous pression selon l'une quelconque des revendications 1 à 9, **caractérisé en ce que** les conduits pour la sortie des gaz (23) de la chambre d'évacuation (22) de gaz sont situés de telle manière que leur axe est perpendiculaire à l'axe du réservoir (1).

13. Récipient pour gaz sous pression selon l'une quelconque des revendications 1 à 9, **caractérisé en ce que** les conduits pour la sortie des gaz (43) de la chambre d'évacuation (22) de gaz sont situés de telle manière que leur axe est parallèle à l'axe du réservoir (1).
